Europäisches Patentamt

European Patent Office

Office européen des brevets

(19)

(11) Veröffentlichungsnummer : **0 118 879
B1**

(12) **EUROPÄISCHE PATENTSCHRIFT**

(45) Veröffentlichungstag der Patentschrift :
11.02.87

(51) Int. Cl.⁴ : **H 04 B 3/44**

(21) Anmeldenummer : 84102454.0

(22) Anmeldetag : 07.03.84

(54) Fernspeise-Baueinheit für Einrichtungen zur Gleichstrom-Reihenspeisung.

(30) Priorität : 11.03.83 DE 3308725

(43) Veröffentlichungstag der Anmeldung :
19.09.84 Patentblatt 84/38

(45) Bekanntmachung des Hinweises auf die Patenterteilung : 11.02.87 Patentblatt 87/07

(84) Benannte Vertragsstaaten :
AT BE CH DE FR GB IT LI NL SE

(56) Entgegenhaltungen :
EP-A- 0 030 004
DE-B- 2 536 219
US-A- 4 160 884
SIEMENS-ZEITSCHRIFT, Band 45, 1971, Beiheft "Nachrichten-Übertragungstechnik", Seiten 118-121 J. KNESEWITSCH et al.: "Fernspeiseeinrichtungen für speisende TF-Verstärkerstellen von Koaxialkabelstrecken"

(73) Patentinhaber : **Siemens Aktiengesellschaft Berlin und München
Wittelsbacherplatz 2
D-8000 München 2 (DE)**

(72) Erfinder : **Ziegler, Alfred, Dipl.-Ing.
Laimer Platz 1
D-8000 München 21 (DE)**

## Beschreibung

Die Erfindung bezieht sich auf eine Fernspeise-Baueinheit für Einrichtungen zur Gleichstrom-Reihenspeisung von elektrischen Verbrauchern, mit einer regelbaren Fernspeise-Stromquelle und mit einer Einrichtung zur Reduktion der Ausgangsspannung, mit deren Hilfe sowohl eine einzelne Fernspeise-Baueinheit als auch eine Reihenschaltung von wenigstens zwei gleichartigen Fernspeise-Baueinheiten wenigstens annähernd auf ein und dieselbe vorgegebene Leerlaufspannung reduzierbar ist, wobei der Istwerteingang eines zur Konstantstromregelung vorgesehenen Komparators an eine Einrichtung zur Messung des Fernspeisestromes angeschlossen ist.

Eine derartige Fernspeise-Baueinheit ist bereits aus der DE-AS 25 36 219 bekannt.

Bei der aus der DE-AS 25 36 219 bekannten Fernspeiseeinrichtung wird eine gleiche Leerlaufspannung auch bei Reihenschaltung mehrerer Geräte dadurch erzielt, daß in jedem der Geräte ein zusätzlicher Kontakt eines eine Ersatzlast einschaltenden Relais im Zusammenwirken mit einer geeigneten Verbindung der Ausgänge der Geräte jeweils das in der Reihenschaltung vorangehende Fernspeisegerät am Ausgang kurzschließt. Die Leerlaufspannung wird daher nur von dem in der Reihenschaltung letzten Fernspeisegerät an die Strecke abgegeben. Diese Fernspeiseeinrichtung hat allerdings die Eigenschaft, daß im Falle einer Störung der die Reduktion auslösenden Überwachungsschaltung in dem in der Reihenschaltung letzten, die Ausgangs-Leerlaufspannung vergebenden Fernspeisegerät, d. h. im Falle einer Spannungsreduktion trotz Nennlast, die anderen Geräte kurzgeschlossen werden. Damit ist die durch die Reihenschaltung der Geräte beabsichtigte Redundanz der Fernspeisung in diesem Störungsfall nicht mehr ohne weiteres gewährleistet.

Ferner ist bereits aus der DE-AS 1 788 007 eine Schaltungsanordnung zur Gleichstrom-Reihenspeisung bekannt, die eine Z-Diodenkette zur Spannungsbegrenzung enthält. Diese Schaltungsanordnung enthält eine zum Schutz der Z-Diodenkette vorgesehene Schaltung, die bei Erreichen der Grenzspannung den über die Z-Diodenkette fließenden Strom durch Herabsetzen des von der geregelten Stromquelle gelieferten Speisestromes zulässig niedrig, z. B. in der Größe von 3 mA, hält.

Aufgabe der Erfindung ist es, eine Fernspeise-Baueinheit der eingangs genannten Art derart auszubilden, daß sich die gewünschte Spannungsreduktion auf ein und denselben vorgegebenen Spannungswert sowohl bei Verwendung einer einzigen Baueinheit als auch bei Serienschaltung mehrerer Baueinheiten erzielen läßt. Insbesondere soll im Falle der Verwendung von mehreren Baueinheiten eine dabei erzielte Redundanz auch bei fehlerhafter Spannungsreduktion trotz Nennlast in einer der Baueinheiten erhalten bleiben.

Gemäß der Erfindung wird die Fernspeise-Baueinheit zur Lösung dieser Aufgabe derart ausgebildet, daß ein Eingang des zur Konstantstromregelung vorgesehenen Komparators mit einem Komparator zum Spannungsvergleich verbunden ist, dessen Istwerteingang an eigene Anschlüsse der Baueinheit geführt ist und der die an die eigenen Anschlüsse geführte Eingangsspannung des Fernspeisekreises mit einer vorgegebenen Referenzspannung vergleicht und der mittels einer Meßeinrichtung, die bei Überschreiten eines vorgegebenen Eingangswiderstandes des Fernspeisekreises anspricht, aktivierbar ist. Die Komparatoren können dabei Operationsverstärker oder Schwellwertschalter sein. Die Aktivierung des Komparators zum Spannungsvergleich kann durch Einschalten seiner Versorgungsspannung oder durch Beeinflussung der Istwertspannung oder dergleichen erfolgen. Der Leerlauffall kann durch die Meßeinrichtung anhand des Fernspeisestromes oder anhand des Fernspeisestromes und der Fernspeisespannung festgestellt werden.

Durch diese Maßnahmen ergibt sich der Vorteil, daß auch bei einer Reihenschaltung von zwei oder mehreren Fernspeisegeräten die gestellte Forderung nach gleichbleibender Leerlaufspannung unabhängig von der Zahl der in Reihe geschalteten Baueinheiten sicher erfüllt wird. Bei redundantem Betrieb mit mehreren Fernspeise-Baueinheiten ergibt sich der weitere Vorteil, daß bei fehlerhafter Reduktion in einem der Geräte oder bei Ausfall eines, insbesondere des letzten, Gerätes der Redundanzbetrieb nicht beeinträchtigt wird.

Vorteilhafte weitere Ausgestaltungen der Erfindung ergeben sich aus den Unteransprüchen.

Die Erfindung wird anhand der in den Figuren dargestellten Ausführungsbeispiele näher erläutert.

Es zeigen

Figur 1 den Stromlauf einer einzelnen Fernspeise-Baueinheit und

Figur 2 den Stromlauf einer Fernspeiseeinrichtung mit drei ausgangsseitig in Serie geschalteten Fernspeise-Baueinheiten.

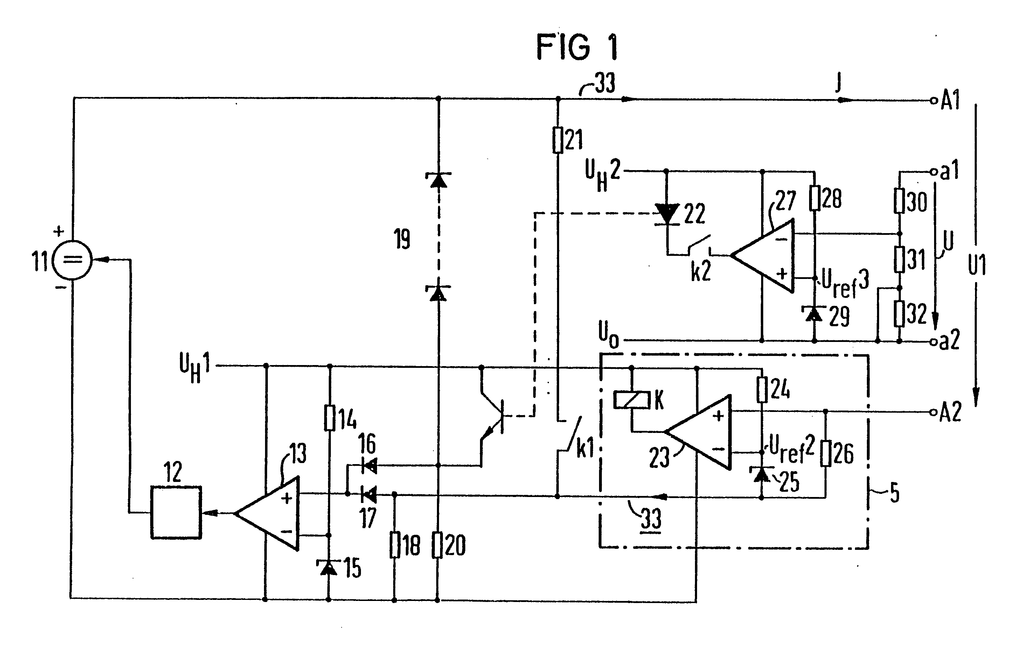

Die Fernspeise-Baueinheit nach Fig. 1 enthält die geregelte Stromquelle 11, die über den Hauptstromkreis 33 einen Fernspeisestrom I an den Ausgang A1, A2 abgibt. Dabei liegt am Ausgang A1, A2 die Fernspeisespannung U1. Der Hauptstromkreis 33 verläuft vom Anschluß A2 des Ausgangs A1, A2 über den Strommeßwiderstand 26, den Strommeßwiderstand 18 und die Stromquelle 11 zum anderen Anschluß A1 des Ausganges A1, A2.

Die Stromquelle 11 wird vom Komparator 13 über den Regelumsetzer 12 derart gesteuert, daß sie bei Normalbetrieb als Fernspeisestrom einen Konstantstrom abgibt. Zu diesem Zweck ist der eine Eingang des Komparators 13 mit einer Referenzspannung $U_{REF}1$, der andere Eingang des Reglers 13 mit der am Meßwiderstand 18 abfallenden Spannung beaufschlagt. Die Referenzspannung $U_{REF}1$ wird mit Hilfe der Z-Diode 15 gewonnen, die über den Vorwiderstand 14 an die auch zur Versorgung des Komparators 13 dienende Hilfsspannung $U_H1$ geführt ist. Z-Diode 15 und Meßwiderstand 18 sind einpolig miteinander verbunden. Zwischen dem Meßwiderstand 18 und dem Regler 13 liegt die zur Entkopplung dienende Diode 17 der aus den Dioden 16 und 17 bestehenden Entkopplungsschaltung.

Parallel zur Stromquelle 11 liegt ein Spannungsbegrenzer, der aus der Reihenschaltung aus der Serienschaltung mehrerer Z-Dioden 19 und dem Widerstand 20 besteht. Der Verbindungspunkt von Z-Diodenserienschaltung und Widerstand 20 ist über die Diode 16 der Entkopplungsschaltung 16, 17 an den Istwert-Eingang des Reglers 13 geführt.

Der Verbindungspunkt der Z-Dioden 19 mit dem Widerstand 20 ist außerdem über die am Ausgang des Optokopplers 22 liegende Emitter-Kollektor-Strecke an die Hilfsspannung $U_H1$ geführt. Die am Eingang des Optokopplers 22 liegende Diodenstrecke liegt mit dem einen Anschluß an der Hilfsspannung $U_H2$ und ist mit dem anderen Anschluß über den Ruhekontakt k2 des Relais K an den Ausgang des Spannungsvergleichers 27 geführt.

Der Spannungsvergleicher 27 wird mit der Hilfsspannung $U_H2$ versorgt. Der nicht invertierende Eingang des Spannungsvergleichers 27 ist über die Z-Diode 29 an ein eigenes Bezugspotential $U_O$ und über den Widerstand 28 an die Hilfsspannung $U_H2$ geführt. Der invertierende Eingang des Spannungsvergleichers 27 liegt am Abgriff eines aus drei Widerständen 30 bis 32 bestehenden Spannungsteilers, dessen äußere Enden an eigene äußere Anschlüsse a1, a2 der Baueinheit geführt sind. Von den beiden Anschlüssen des in der Mitte des Spannungsteilers angeordneten Widerstandes 31 ist der eine an den invertierenden, bzw. Istwert-Eingang des Spannungsvergleichers 27 geführt und der andere als Anschluß für das eigene Bezugspotential $U_O$ verwendet.

Die Fernspeise-Baueinheit enthält ferner eine Meßeinrichtung 23 für den Fernspeisestrom I, dessen Größe im Falle der Begrenzung der Ausgangsspannung entweder durch die Z-Diodenkette 19 oder durch Einschalten der Ersatzlast 21 nach Streckenunterbrechung als Kriterium für den Eingangswiderstand des Fernspeisekreises dient. Diese Meßeinrichtung enthält den Komparator 23, dessen invertierender Eingang über die Z-Diode 25 an den Hauptstromkreis 33 und über den Widerstand 24 an die Hilfsspannung $U_H1$ geführt ist. Im Hauptstromkreis 33 liegt zwischen dem Anschluß der Z-Diode 25 und dem Anschluß A2 der Baueinheit der Widerstand 26. Der nicht invertierende bzw. Istwert-Eingang des Komparators 23 liegt an dem mit dem Widerstand 26 verbundenen Anschluß A2. Der Ausgang des Komparators 23 ist über die Erregerwicklung des Relais K an die Hilfsspannung $U_H1$ geführt.

Der Arbeitskontakt k1 des Relais K liegt auf der einen Seite am Verbindungspunkt der im Hauptstromkreis liegenden Strommeßwiderstände 18 und 26 und ist auf der anderen Seite über den eine Ersatzlast bildenden Widerstand 21 an den Pluspol der Stromquelle 11 bzw. an den Anschluß A1 der Fernspeise-Baueinheit geführt.

Im beschriebenen Ausführungsbeispiel sind die ferngespeisten elektrischen Verbraucher Zwischenverstärker oder Regeneratoren einer Nachrichten-Übertragungsstrecke. Die auf Weitverkehrs-Kabelstrecken eingesetzten Zwischenverstärker oder -regeneratoren können Schaltzusätze enthalten, die im Falle einer Unterbrechung der Strecke die Fernspeiseschleife vor dem unterbrochenen Feld schließen. In diesem Fall ist es von besonderer Bedeutung, daß die Leerlaufspannung der Fernspeiseeinrichtung auch bei Reihenschaltung mehrerer Geräte immer den gleichen Wert aufweist, da nur dann ein eindeutiges Meßkriterium geschaffen ist, mit dem festgestellt werden kann, ob mindestens ein Verstärker- bzw. Regeneratorfeld an die Fernspeiseeinrichtung angeschlossen ist und somit die Fernspeisung mit dem vollen Fernspeisestrom in Betrieb genommen werden kann.

Das in Fig. 1 gezeigte Fernspeisegerät ist zur Fernspeisung von Weitverkehrs-Kabelstrecken bestimmt und enthält eine Überwachungsschaltung, die bei einer Unterbrechung des Fernspeisekreises seine Ausgangsspannung auf einen ungefährlichen Wert von z. B. 40 V reduziert, sobald der Ausgangsstrom unter einen bestimmten Mindestwert absinkt.

Im Zustand der Spannungsreduktion ist das Relais K erregt. Die Arbeitskontakte k1 und k2 des Relais K sind dabei geschlossen. Auf diese Weise wird erreicht, daß das Anschalten des als Ersatzlast dienenden Widerstandes 21 an die Konstantstromquelle 11 und die Steuerung des Stromreglers durch den Komparator 27 zur Begrenzung der Leerlaufspannung nur während des Zustandes der Spannungsreduktion wirksam ist.

Die Z-Dioden 19 begrenzen die Ausgangsspannung der Fernspeise-Baueinheit sowohl bei Reihenschaltung von zwei oder mehreren Geräten bei fehlerfreier Strecke, als auch für den Fall, daß durch Unterbrechung des Fernspeisekreises eine Entlastung des Ausganges erfolgt. Im letztgenannten Fall wirkt die Begrenzung in dem Zeitraum bis zum Schließen des Kontaktes k1. Zum Schutz der Z-Diodenkette gegen Überlastung ist die am Widerstand 20 abfallende Spannung über die Entkopplungsdiode 16 an den Komparator 13 geführt. Fließt bei Erreichen der Grenzspannung über die Z-Diodenkette ein Strom, so wird dieser Strom gegebenenfalls durch Herabsetzen des von der Stromquelle 11 gelieferten Stromes zulässig niedrig gehalten.

Für den Betrieb langer Fernspeisestrecken werden zweckmäßigerweise zwei oder mehr Fernspeisegeräte in Reihe geschaltet. Als besonders zweckmäßig kann sich eine Reihenschaltung von drei Geräten erweisen, von denen eines als sogenannte heiße Reserve dient.

Ohne die nach Fig. 1 vorgesehenen Maßnahmen erfolgt bei einer solchen Reihenschaltung nach einer Unterbrechung der Fernspeisestrecke die Spannungsreduktion in jedem Gerät, wobei dann zwischen den Fernspeiseleitungen der Summenwert der Leerlaufspannung, z. B. zweimal 40 V bzw. dreimal 40 V, auftritt.

Im Hinblick auf die Verwendung bei Fernspeisekreisen mit Schaltzusätzen in den ferngespeisten Zwischenstellen hat das Fernspeisegerät zweckmäßigerweise die Eigenschaft, daß es aus dem Zustand der Spannungsreduktion selbsttätig die normale Speisestromlieferung wieder aufnimmt bzw. wieder aufschaltet, sobald an seinem Ausgang der Widerstand mindestens eines Verstärkerfeldes anliegt. Es kann jedoch aus Gründen des Personenschutzes die Forderung gelten, daß es nicht aufschalten darf, wenn dieser Widerstand die Größe des Berührungswiderstandes erreicht, der z. B. in VDE 0800, Teil 3, mit 2 000 Ω angegeben ist.

Da die Leerlaufspannung bei der Reduktion der Fernspeisespannung unabhängig von der Anzahl der in Reihe geschalteten Fernspeisegeräte den gleichen Wert beibehält, wird die obengenannte Forderung nach einem Nichtaufschalten bei einer Reihenschaltung von zwei oder drei Fernspeisegeräten auch dann erfüllt, wenn der Eingangswiderstand eines Verstärkerfeldes in einer Größe liegt, die z. B. die Hälfte des Wertes des Berührungswiderstandes überschreitet.

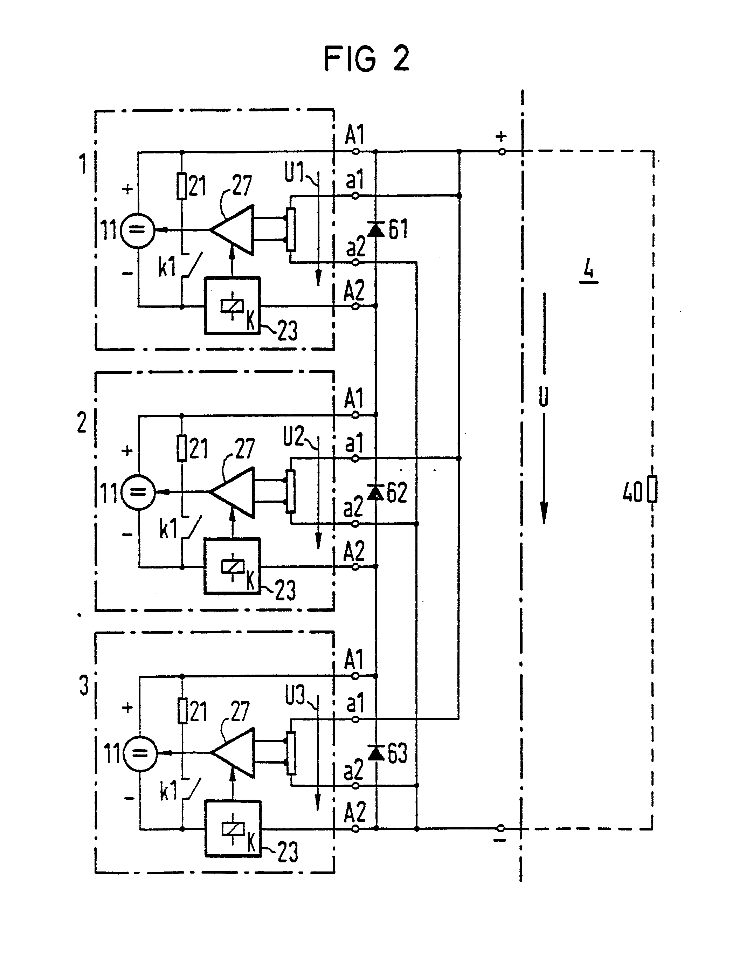

Fig. 2 zeigt eine Reihenschaltung von drei Fernspeisegeräten bzw. Fernspeise-Baueinheiten nach Fig. 1. Die gezeigte Anordnung sorgt für eine gleichbleibende Leerlaufspannung bei Unterbrechung der Fernspeisestrecke.

Die Fernspeise-Baueinheiten 1 bis 3 sind mit ihren Ausgangsklemmenpaaren A1, A2 mit gleicher Polung in Serie geschaltet, so daß am Ausgang der Serienschaltung bzw. am Eingang des Fernspeisekreises 4 eine Eingangsspannung U anliegt, die gleich der Summe der Ausgangsspannungen U1, U2 und U3 der Fernspeise-Baueinheiten 1 ... 3 ist. In jeder Aufnahmevorrichtung für das zugehörige Fernspeisegerät ist zwischen den Anschlußpunkten für die Ausgänge A1, A2 der Fernspeise-Baueinheit eine Diode 61 ... 63 so geschaltet, daß sie für die Ausgangsspannung der betreffenden Baueinheit in Sperrichtung gepolt ist. Auf diese Weise wird erreicht, daß nach dem Entfernen eines Gerätes der Fernspeisestromkreis geschlossen bleibt.

Von den Fernspeise-Baueinheiten 1 ... 3 sind jeweils nur die Stromquelle 11, die über den Relaiskontakt k1 einschaltbare Ersatzlast 21, der im Sinne einer Spannungsbegrenzung auf die geregelte Stromquelle 1 einwirkende Spannungsvergleicher 27 und die Meßeinrichtung 23 dargestellt, die bei Überschreiten eines vorgegebenen Eingangswiderstandes des Fernspeisekreises 4 anspricht und dabei den Komparator 27 aktiviert.

Bei allen drei Fernspeise-Baueinheiten 1 ... 3 sind die äußeren Anschlüsse des dem Komparator 27 vorgeschalteten Spannungsteilers als eigene Anschlüsse a1, a2 der Baueinheit herausgeführt. Diese Anschlußklemmenpaare a1, a2 sind jeweils mit der Eingangsspannung U des Fernspeisekreises 4, d. h. mit der Summe der Ausgangsspannungen U1, U2 und U3 beaufschlagt.

Im Zustand der Spannungsreduktion wird in jedem Gerät die Stromlieferung der geregelten Konstantstromquelle von dem die Streckenspannung U messenden Spannungsvergleicher 27 solange herabgesetzt, bis die Streckenspannung U den Leerlauf-Wert von z. B. 40 V erreicht hat. Die Forderung nach einer gleichbleibenden Leerlaufspannung wird daher auch bei einer Reihenschaltung von zwei oder mehreren Geräten erfüllt.

**Patentansprüche**

1. Fernspeise-Baueinheit für Einrichtungen zur Gleichstrom-Reihenspeisung von elektrischen Verbrauchern, mit einer regelbaren Fernspeise-Stromquelle (11) und mit einer Einrichtung zur Reduktion der Ausgangsspannung, mit deren Hilfe sowohl eine einzelne Fernspeise-Baueinheit als auch eine Reihenschaltung von wenigstens zwei gleichartigen Fernspeise-Baueinheiten wenigstens annähernd auf ein und dieselbe vorgegebene Leerlaufspannung reduzierbar ist, wobei der Istwerteingang eines zur Konstantstromregelung vorgesehenen Komparators (13) an eine Einrichtung zur Messung des Fernspeisestromes angeschlossen ist, dadurch gekennzeichnet, daß ein Eingang des zur Konstantstromregelung vorgesehenen Komparators (13) mit einem Komparator (27) zum Spannungsvergleich verbunden ist, dessen Istwerteingang an eigene Anschlüsse (a1, a2) der Baueinheit geführt ist und der die an die eigenen Anschlüsse geführte Eingangsspannung (U) des Fernspeisekreises (4) mit einer vorgegebenen Referenzspannung (U$_{REF}$3) vergleicht und der mittels einer Meßeinrichtung (23), die bei Überschreiten eines vorgegebenen Eingangswiderstandes (R$_E$) des Fernspeisekreises (4) anspricht, aktivierbar ist.

2. Fernspeise-Baueinheit nach Anspruch 1, dadurch gekennzeichnet, daß der Ausgang des Komparators (27) über einen durch die Einrichtung zur Messung des Fernspeisestromes derart steuerbaren Schalter (k2) und über eine Potentialtrennstufe an den zur Konstantstromregelung vorgesehenen Komparator (13) geführt ist, daß der Schalter (k2) bei Fernspeiseströmen unterhalb eines vorgegebenen Grenzwertes geschlossen ist.

3. Fernspeise-Baueinheit nach Anspruch 1 oder 2, dadurch gekennzeichnet, daß dem Istwerteingang des zur Konstantstromregelung vorgesehenen Komparators (13) eine Entkopplungsschaltung (16, 17) vorgeschaltet ist, bei der an den Eingängen ein im Hauptstromkreis (33) der Stromquelle (11) liegender Strommeßwiderstand (18) und ein Strommeßwiderstand (20) in Verbindung mit dem steuernden Ausgang der Potentialtrennstufe liegen.

4. Fernspeise-Baueinheit nach Anspruch 3, dadurch gekennzeichnet, daß an den an die Potentialtrennstufe angeschlossenen Eingang der Entkopplungsschaltung (16, 17) eine an die Stromquelle (11) angeschlossene Z-Diodenkette (19) liegt.

5. Fernspeise-Baueinheit nach einem der Ansprüche 1 bis 4, dadurch gekennzeichnet, daß mittels der Meßeinrichtung (23), die bei Überschreiten eines vorgegebenen Eingangswiderstandes ($R_E$) des Fernspeisekreises (4) anspricht, zusätzlich zu dem Schalter (k2) zur Aktivierung des Komparators (27) zum Spannungsvergleich ein Schalter (k1) zum Anschalten einer Ersatzlast (21) an die Stromquelle (11) steuerbar ist.

6. Fernspeise-Baueinheit nach einem der Ansprüche 1 bis 5, dadurch gekennzeichnet, daß der Komparator zum Spannungsvergleich (27) über einen an zwei Hilfsspannungen ($U_H1$, $U_H2$) liegenden Optokoppler (22) an die Entkopplungsschaltung (16, 17) geführt ist.

7. Fernspeise-Baueinheit nach einem der Ansprüche 1 bis 6, dadurch gekennzeichnet, daß am Ausgang der Meßeinrichtung (23) für den Eingangswiderstand (40) des Fernspeisekreises (4) ein Relais (K) liegt, das mit einem Kontakt (k2) zwischen dem Ausgang des Komparators (27) zum Spannungsvergleich und dem Optokoppler (22) und mit einem weiteren Kontakt (k1) in Serie zur Ersatzlast (21) liegt.

8. Fernspeise-Baueinheit nach einem der Ansprüche 1 bis 7, dadurch gekennzeichnet, daß parallel zum Ausgang der Fernspeise-Baueinheit in der zugehörigen Aufnahmevorrichtung eine bei aktiver Stromquelle (11) gesperrte Diode (61 ; 62 ; 63) angeordnet ist.

9. Schaltungsanordnung mit wenigstens zwei Fernspeise-Baueinheiten nach einem der Ansprüche 1 bis 8, dadurch gekennzeichnet, daß die eigenen Anschlüsse (a1, a2) der Baueinheiten parallel an den Fernspeisekreis (4) angeschlossen sind.

10. Schaltungsanordnung nach Anspruch 9, gekennzeichnet durch die Verwendung zur Speisung von Fernspeisekreisen, die in den Zwischenstellen Schaltzusätze zum Schließen der Fernspeiseschleife nach einer Streckenunterbrechung enthalten.

**Claims**

1. A remote feed unit for the series D. C. supply of electrical loads, with a remote, regulatable current source (11) and a device for reducing the output voltage, with the assistance of which an individual remote feed unit or a series arrangement of at least two identical remote feed units can be produced at least approximately to one and the same predetermined no-load voltage, where the actual value input of a comparator (13), provided for constant current regulation, is connected to a device which measures the remote feed current, characterised in that an input of the comparator (13) provided for constant current regulation is connected to a comparator (27) which carries out a voltage comparison, and whose actual value input leads to specific terminals (a1), (a2) of the unit and compares the input voltage (U) supplied to the terminals of the remote feed circuit (4) with a given reference voltage ($U_{REF}3$), and which is activatable by a measuring device (23) which responds when a given input impedance ($R_E$) of the remote feed circuit (4) is exceeded.

2. A remote feed unit as claimed in Claim 1, characterised in that the output of the comparator (27) leads *via* a switch (k2), controllable by the device for measuring the remote feed current, and *via* a potential isolating stage, to the comparator (13) provided for constant current regulation, where the switch (k2) can be controlled by the remote feed current measuring device such that the switch (k2) is closed when remote feed currents are below a predetermined limit value.

3. A remote feed unit as claimed in Claim 1 or 2, characterised in that the actual value input of the comparator (13) provided for constant current regulation is preceeded by a decoupling circuit (16, 17) in which the inputs are connected to a current measuring impedance (18), located in the main circuit (33) of the current source (11), and to a current measuring impedance (20) in combination with the control output of the potential isolating stage.

4. A remote feed unit as claimed in Claim 3, characterised in that the potential isolating stage has a Zener diode chain (19) incorporated, is connected to that input of the decoupling circuit (16, 17) connected to the current source (11).

5. A remote feed unit as claimed in one of the Claims 1 to 4, characterised in that in addition to the switch (k2) which activates the comparator (27) for the voltage comparison, a switch (k1) which connects an equivalent load (21) to the current source (11) can be controlled by means of the measuring device (23) which responds when a predetermined input impedance ($R_E$) of the remote feed circuit (4) is exceeded.

6. A remote feed unit as claimed in one of the Claims 1 to 5, characterised in that the comparator (27) which effects the voltage comparison leads to the decoupling circuit (16, 17) *via* an opto-coupler (22) connected to two auxiliary voltages ($U_H1$, $U_H2$).

7. A remote feed unit as claimed in one of the Claims 1 to 6, characterised in that the output of the measuring device (23) for the input impedance (40) of the remote feed circuit (4) is connected to a relay (K) connected by one contact (k2) between the output of the comparator (27) which effects the voltage comparison and the opto-coupler (22), and is connected by another contact (k1) in series with the equivalent load (21).

8. A remote feed unit as claimed in one of the Claims 1 to 7, characterised in that a diode (61 ; 62 ; 63), blocked when the current source (11) is active, is arranged parallel to the output of the remote feed unit in the associated accommodating device.

9. A circuit arrangement comprising at least two remote feed units as claimed in one of the Claims 1 to 8, characterised in that the specific terminals (a1, a2) of the units are connected in parallel to the remote feed circuit (4).

10. A circuit arrangement as claimed in Claim 9, characterised by its use for the feeding of remote feed circuits in the intermediate stations, and contain auxiliary switching devices to close the remote feed loop following an interruption in the link.

## Revendications

1. Module d'alimentation à distance pour des dispositifs servant à réaliser une alimentation série en courant continu d'appareils d'utilisation électriques, comportant une source réglable (11) de courant d'alimentation à distance et un dispositif servant à réduire la tension de sortie et à l'aide duquel la tension à vide aussi bien d'un module individuel d'alimentation à distance que d'un circuit série formé d'au moins deux modules d'alimentation à distance de même type, peut être réduite au moins approximativement à une même valeur prédéterminée, l'entrée de la valeur réelle d'un comparateur (13) prévu pour réaliser la régulation d'un courant constant étant raccordée à un dispositif servant à mesurer le courant d'alimentation à distance, caractérisé par le fait qu'une entrée du comparateur (13) prévu pour réaliser la régulation du courant constant est reliée à un comparateur (27) servant à réaliser une comparaison de tension, dont l'entrée de la valeur réelle est reliée à des bornes particulières (a1, a2) du module et qui compare la tension d'entrée (U) du circuit d'alimentation à distance (4) envoyée aux bornes particulières à une tension de référence prédéterminée ($U_{REF}3$) et qui peut être activé au moyen d'un dispositif de mesure (23) qui répond lors du dépassement d'une résistance d'entrée prédéterminée ($R_E$) du circuit d'alimentation à distance (4).

2. Module d'alimentation à distance selon la revendication 1, caractérisé par le fait que la sortie du comparateur (27) est raccordée au comparateur (13) prévu pour réaliser la régulation du courant constant, par l'intermédiaire d'un étage de séparation de potentiel et par l'intermédiaire d'un commutateur (k2) qui peut être commandé par le dispositif servant à mesurer le courant d'alimentation à distance de telle sorte que le commutateur (k2) est fermé lorsque des courants d'alimentation à distance tombent au-dessous d'une valeur limite prédéterminée.

3. Module d'alimentation à distance suivant la revendication 1 ou 2, caractérisé par le fait qu'en amont de l'entrée de la valeur réelle du comparateur (13) prévu pour réaliser la régulation du courant constant se trouve branché un circuit de découplage (16, 17) aux entrées duquel sont reliées une résistance ampèremétrique (18) située dans le circuit principal (33) de la source de courant (11) et une résistance ampèremétrique (20), ces résistances étant reliées à la sortie, réalisant la commande de l'étage de séparation de potentiel.

4. Unité d'alimentation à distance suivant la revendication 3, caractérisée par le fait qu'une chaîne de diodes Zener (19), raccordée à la source de courant (11) est reliée à l'entrée du circuit de découplage (16, 17), qui est raccordée à l'étage de séparation de potentiel.

5. Module d'alimentation à distance suivant l'une des revendications 1 à 4, caractérisé par le fait qu'à l'aide du dispositif de mesure (23) qui répond lors de dépassements d'une résistance d'entrée prédéterminée ($R_E$) du circuit d'alimentation à distance (4), en dehors du commutateur (k2) servant à activer le comparateur (27) en vue de réaliser une comparaison de tension, un commutateur (k1) peut être commandé de manière à raccorder une charge de remplacement (21) à la source de courant (11).

6. Module d'alimentation à distance suivant l'une des revendications 1 à 5, caractérisé par le fait que le comparateur servant à réaliser la comparaison de tension (27) est relié par l'intermédiaire d'un opto-coupleur (22) raccordé à deux tensions auxiliaires ($U_H1$, $U_H2$) au circuit de découplage (16, 17).

7. Module d'alimentation à distance suivant l'une des revendications 1 à 6, caractérisé par le fait qu'à la sortie du dispositif (23) de mesure de la résistance d'entrée (40) du circuit d'alimentation à distance (4) se trouve disposé un relais (K) qui est raccordé à un contact (k2) situé entre la sortie du comparateur (27) servant à réaliser la comparaison de tension et l'opto-coupleur (22) et un autre contact (k1) en série avec la charge de remplacement (21).

8. Module d'alimentation à distance suivant l'une des revendications 1 à 7, caractérisé par le fait qu'en parallèle avec la sortie du module d'alimentation à distance se trouve disposée, dans le dispositif de réception associé, une diode (61 ; 62 ; 63) bloquée lorsque la source de courant (11) est active.

9. Montage comportant au moins deux modules d'alimentation à distance suivant l'une des revendications 1 à 8, caractérisé par le fait que les bornes particulières (a1, a2) du module sont raccordées en parallèle au circuit d'alimentation à distance (4).

10. Montage suivant la revendication 9, caractérisé par son utilisation pour alimenter des circuits d'alimentation à distance, qui contiennent, dans les postes intermédiaires, des ensembles supplémentaires de commutation servant à fermer la boucle d'alimentation à distance après une interruption de section.

FIG 1

# FIG 2